# EUROPÄISCHE PATENTSCHRIFT

(11) **EP 3 330 499 B1**
(45) Veröffentlichungstag und Bekanntmachung des Hinweises auf die Patenterteilung: **23.08.2023**
(21) Anmeldenummer: 16202101.8
(22) Anmeldetag: 05.12.2016
(51) Int. Cl.: F01K 23/06

(54) **SYSTEM UND VERFAHREN ZUR ENERGIERÜCKGEWINNUNG IN INDUSTRIEANLAGEN**
SYSTEM AND METHOD FOR ENERGY RECOVERY IN INDUSTRIAL FACILITIES
SYSTÈME ET PROCÉDÉ DE RÉCUPÉRATION D'ÉNERGIE DANS DES INSTALLATIONS INDUSTRIELLES

(43) Veröffentlichungstag der Anmeldung: 06.06.2018
(73) Patentinhaber: Orcan Energy AG, 81379 München (DE)
(72) Erfinder: Schuster, Andreas, 86874 Tussenhausen (DE); Sichert, Andreas, 83510 Laufen (DE)
(74) Vertreter: Grünecker Patent- und Rechtsanwälte PartG mbB

(56) Entgegenhaltungen:
- DE-A1-102010 047 520
- DE-A1-102011 008 027
- DE-A1-102012 019 967

## Beschreibung

### Gebiet der Erfindung

Die Erfindung betrifft ein System mit wenigstens einer Wärmequelle und einer thermodynamischen Kreisprozessvorrichtung gemäß Anspruch 1 und ein Verfahren zur Energierückgewinnung in einem derartigen System gemäß Anspruch 7.

### Stand der Technik

Abwärme, die in industriellen Anlagen anfällt, kann in einer thermodynamischen Kreisprozessvorrichtung verwendet werden, um ein Arbeitsmedium zu erhitzen und dann in einer Expansionsmaschine zu entspannen. Über einen mit der Welle der Expansionsmaschine gekoppelten Generator kann elektrische Energie erzeugt werden. Der Organic-Rankine-Cycle (ORC) Prozess ist dafür gut geeignet. Die Dokumente DE102011008027 A1, DE102012019967 A1 und DE102010047520 A1 offenbaren Energiegewinnungsanlagen innerhalb einer thermodynamischen Kreisprozessvorrichtung.

Dabei ergibt sich die folgende Problemstellung. Aufgrund der geringen Strombezugskosten, der auf erzeugten Eigenstrom fälligen EEG-Umlage sowie ggf. einem hohen Aufwand für die Verbindung einer Stromeinspeiseanlage mit einer Einspeisestelle im Industrieumfeld, ist die Attraktivität, erzeugten Strom gegen Vergütung in das Netz einzuspeisen, niedrig. Für die Abrechnung von erzeugter und ins Netz eingespeister elektrischer Energie sind geeichte Zähler vorzusehen. Diese sind teuer, die Abrechnung und der administrative Aufwand sind hoch.

### Beschreibung der Erfindung

Aufgabe der Erfindung ist es, die genannten Nachteile zumindest teilweise zu überwinden und die in eine andere Energieform umgewandelte Abwärme innerhalb der Industrieanlage zu nutzen.

Diese Aufgabe wird gelöst durch ein System nach Anspruch 1.

Das erfindungsgemäße System zur Energierückgewinnung innerhalb einer Anordnung von industriellen Komponenten umfasst eine Wärmequelle der Industrieanlage; eine thermodynamische Kreisprozessvorrichtung, insbesondere eine ORC-Vorrichtung, mit einem Wärmeübertrager zur Übertragung von Wärme von der Wärmequelle auf ein Arbeitsmedium der thermodynamischen Kreisprozessvorrichtung und mit einer Expansionsvorrichtung zur Expansion des Arbeitsmediums und zur Erzeugung von mechanischer oder elektrischer Energie; und wenigstens eine anzutreibende Komponente der Anordnung, insbesondere wenigstens eine hydraulische oder pneumatische Maschine, die mit der erzeugten Energie antreibbar ist. Der Antrieb der wenigstens einen Komponente der Anordnung mit der erzeugten Energie kann dabei direkt mechanisch oder indirekt elektrisch erfolgen. Die Drehbewegung der Expansionsvorrichtung stellt zunächst mechanische / kinetische Energie bereit, die direkt genutzt werden kann, oder mit einem an die Expansionsvorrichtung gekoppelten Generator kann elektrische Energie bereitgestellt werden.

Das erfindungsgemäße System hat den Vorteil, dass es ist wirtschaftlicher ist, die aus Abwärme erzeugte/gewandelte Energie innerhalb der industriellen Anlage (z.B. einer Energiezentrale eines Unternehmens) zu nutzen und nicht dauerhaft in das Stromnetz einzuspeisen. Die Energie, die durch das ORC-System rückgewonnen wird, kann direkt für elektrische Verbraucher verwendet werden, mechanisch eingekoppelt werden (z.B. Pumpen, Antriebe) oder in andere Energieformen gewandelt werden (hydraulische Energie, Druckluft). Dadurch können Komponenten oder einzelne Funktionen von Komponenten eingespart werden.

Das erfindungsgemäße System kann dahingehend weitergebildet werden, dass die wenigstens eine anzutreibende Komponente einen Druckluftkompressor, eine Hydraulikpumpe oder eine Wasserpumpe umfassen kann, die durch eine mechanische Kopplung an die Expansionsmaschine direkt mechanisch antreibbar ist.

Ein anderes Beispiel besteht darin, dass ein elektrischer Generator zur Erzeugung von elektrischer Energie vorgesehen sein kann, der mit der mechanischen Energie der Expansionsvorrichtung antreibbar ist, wobei die wenigstens eine anzutreibende Komponente einen elektrischen Motor umfasst, der mit der elektrischen Energie antreibbar ist.

Dies kann dahingehend weitergebildet werden, dass der elektrische Motor ein elektrischer Antriebsmotor für einen Druckluftkompressor, ein elektrischer Antriebsmotor für eine Hydraulikpumpe, ein elektrischer Antriebsmotor für eine Wasserpumpe oder ein elektrischer Antriebsmotor für einen Lüfter sein kann.

Gemäß der Erfindung ist eine Elektromotor/Generator-Einheit zwischen der Expansionsvorrichtung und der wenigstens einen anzutreibenden Komponente vorgesehen.

Dies kann dahingehend weitergebildet werden, dass zwischen der Expansionsvorrichtung und der Elektromotor/Generator-Einheit eine erste Kupplung vorgesehen sein kann und/oder wobei zwischen der Elektromotor/Generator-Einheit und der wenigstens einen anzutreibenden Komponente eine zweite Kupplung vorgesehen sein kann.

Gemäß der Erfindung ist eine Ankopplung des Generators und des elektrischen Motors bzw. der Elektromotor/Generator-Einheit an ein Stromnetz vorgesehen.

Nach einer anderen Weiterbildung kann weiterhin ein Energiespeicher zur Aufnahme von elektrischer Energie von dem Generator bzw. der Elektromotor/Generator-Einheit und zur Abgabe von elektrischer Energie an den elektrischen Motor bzw. an die Elektromotor/Generator-Einheit vorgesehen sein.

Eine andere Weiterbildung besteht darin, dass die thermodynamische Kreisprozessvorrichtung in Bezug auf die Strömungsrichtung des Arbeitsmediums stromaufwärts des Wärmeübertragers einen weiteren Wärmeübertrager umfassen kann, wobei Abwärme der Kompressorvorrichtung in dem weiteren Wärmeübertrager zur Vorwärmung des Arbeitsmediums auf das Arbeitsmedium übertragen werden kann.

Die oben genannte Aufgabe wird auch gelöst durch ein Verfahren nach Anspruch 7.

Ein weiteres Beispiel besteht darin, dass ein Erzeugen von elektrischer Energie mit einem mit der Expansionsvorrichtung gekoppelten Generator vorgesehen ist.

Gemäß dem erfindungsgemäßen Verfahren ist eine Elektromotor/Generator-Einheit zwischen der Expansionsvorrichtung und der wenigstens einen Komponente vorgesehen.

Dies kann weitergebildet werden, so dass das Verfahren weiterhin die folgenden Schritte umfasst: Einspeisen von elektrischer Energie von der Elektromotor/Generator-Einheit in ein Stromnetz oder in einen systeminternen Energiespeicher; und/oder Zuführen von elektrischer Energie von dem Stromnetz oder von dem systeminternen Energiespeicher an die Elektromotor/Generator-Einheit.

Eine andere Weiterbildung besteht darin, dass zwischen der Expansionsvorrichtung und der Elektromotor/Generator-Einheit eine erste Kupplung vorgesehen sein kann und/oder wobei zwischen der Elektromotor/Generator-Einheit und der wenigstens einen Komponente eine zweite Kupplung vorgesehen kann, wobei das Verfahren die weiteren Schritte umfassen kann: Verbinden oder Trennen der Expansionsvorrichtung und der Elektromotor/Generator-Einheit mit der ersten Kupplung; und/oder Verbinden oder Trennen der Elektromotor/Generator-Einheit und der wenigstens einen Komponente mit der zweiten Kupplung. Die erste und/oder zweite Kupplung kann bzw. könenn einen drehrichtungs- oder drehzahlabhängigen Freilauf aufweisen.

Gemäß einer anderen Weiterbildung kann die thermodynamische Kreisprozessvorrichtung in Bezug auf die Strömungsrichtung des Arbeitsmediums stromaufwärts des Wärmeübertragers einen weiteren Wärmeübertrager umfassen, wobei das Verfahren den weiteren Schritt umfassen kann: Übertragen von Abwärme der Kompressorvorrichtung auf das Arbeitsmedium in dem weiteren Wärmeübertrager zum Vorwärmen des Arbeitsmediums.

Die genannten Weiterbildungen können einzeln eingesetzt oder wie beansprucht geeignet miteinander kombiniert werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Zeichnungen

- Fig. 1: zeigt eine erste Ausführungsform des erfindungsgemäßen Systems.
- Fig. 2: zeigt eine zweite Ausführungsform des erfindungsgemäßen Systems.
- Fig. 3: zeigt eine dritte Ausführungsform des erfindungsgemäßen Systems.
- Fig. 4: zeigt eine vierte Ausführungsform des erfindungsgemäßen Systems.

### Ausführungsformen

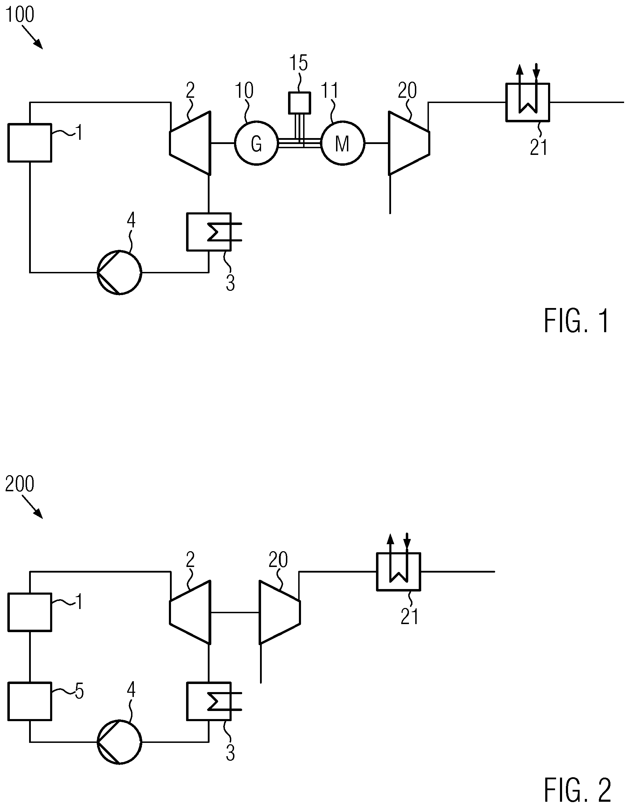

Fig. 1 zeigt eine erste Ausführungsform 100 des erfindungsgemäßen Systems.

Eine Organic-Rankine-Cycle (ORC) Vorrichtung mit einem Arbeitsmedium wird eingesetzt, um Abwärme in einer Industrieanlage zu nutzen, d.h. die Abwärme in mechanische bzw. elektrische Energie zu wandeln. Nutzbare Wärmequellen sind z.B. Abgas, Öl, Kühlwasser, und Verdichtungswärme im Kompressor (so kann z.B. der Kompressorkühler substituiert oder entlastet werden). Die ORC Vorrichtung umfasst einen Wärmetauscher / Verdampfer 1, eine Expansionsmaschine 2 (Expansionsvorrichtung), einen Kondensator 3 und einer Speisepumpe 4. An einer Welle der Expansionsmaschine 2 ist ein Generator 10 zur Erzeugung von elektrischer Energie angeordnet. Die zu nutzende Abwärme wird über den Wärmetauscher 1 dem Arbeitsmedium zugeführt. Das Arbeitsmedium wird dadurch verdampft und in der Expansionsmaschine 2 entspannt und in Bewegungsenergie der Expansionsmaschine 2 umgewandelt. Im Kondensator 3 wird das Arbeitsmedium wieder verflüssigt. Die erzeugte elektrische Energie von Generator 10 wird hier genutzt, um einen Elektromotor 11 eines Kompressors 20 anzutreiben. Aus dem Kompressorkreislauf wird Abwärme über einen Kompressorkühler 21 abgeführt.

Der Generator 10 und der Motor 11 können mit einem Energiespeicher, z.B. einer wiederaufladbaren Batterie 15 verbunden sein, um überschüssige Energie vom Generator 10 zu speichern und bei erhöhtem Energiebedarf dem Motor 11 elektrische Energie zuzuführen. Alternativ oder zusätzlich kann auch ein Last- oder Heizwiderstand vorgesehen sein, falls keine elektrische Leistung von der anzutreibenden Komponente abgeführt werden kann. Alternativ oder zusätzlich kann auch eine Verbindung mit dem Stromnetz vorgesehen sein, über die kurzzeitig elektrische Energie eingespeist wird, bis die elektrische Leistung von der anzutreibenden Komponente wieder aufgenommen werden kann. Eine solche kurzzeitige Einspeisung ist in der Regel nicht an Netzvorgaben gebunden.

Fig. 2 zeigt eine zweite Ausführungsform 200 des erfindungsgemäßen Systems.

Gegenüber Fig. 1 bedeuten hier und in den folgenden Figuren gleiche Bezugszeichen gleiche Elemente.

In Unterschied zur Ausführungsform nach Fig. 1 besteht hier zwischen der Expansionsmaschine 2 und dem Kompressor 20 eine mechanische Kopplung, so dass der Kompressor 20 unmittelbar / direkt mit der Bewegungsenergie der Expansionsmaschine 2 angetrieben wird. Entweder ist der Kompressor 20 direkt mit einer Welle der Expansionsmaschine 2 verbunden oder es ist dazwischen ein Getriebe vorgesehen, um die Drehgeschwindigkeiten anzupassen. Weiterhin ist in dieser Ausführungsform 200 in der ORC-Vorrichtung ein weiterer Wärmetauscher 5 zwischen Speisepumpe 4 und dem Wärmetauscher 1 zum Vorwärmen des Arbeitsmediums vorgesehen. In diesem weiteren Wärmetauscher 5 wird Abwärme vom Kompressorkreislauf oder einer sonstigen Niedertemperaturwärmequelle über den Kühler / Kompressorwärmetauscher 21 dem ORC-Arbeitsmedium zugeführt.

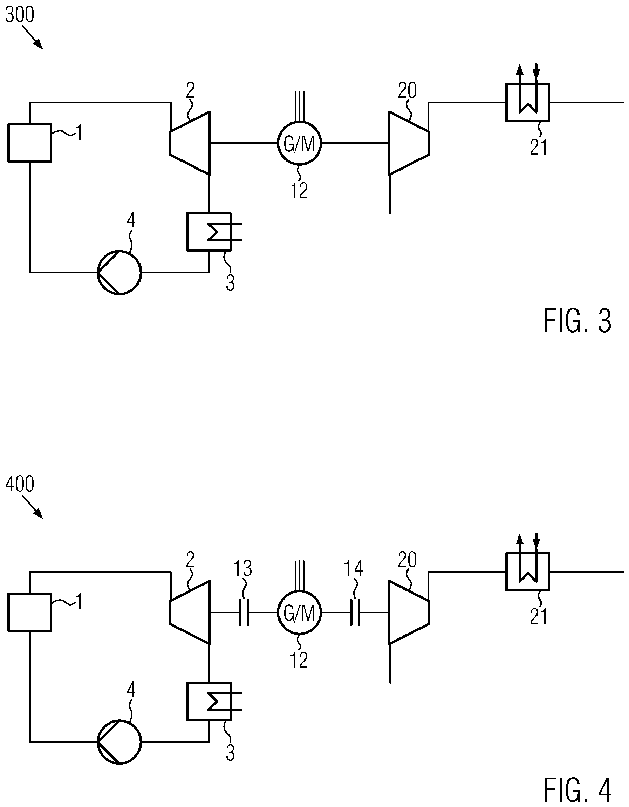

Fig. 3 zeigt eine dritte Ausführungsform 300 des erfindungsgemäßen Systems.

Hier ist anstelle des Generators 10 und des Motors 11bzw. anstelle der mechanischen Kopplung zwischen der Expansionsvorrichtung 2 und dem Kompressor 20 eine Elektromotor/Generator-Einheit 12 (Asynchronmotor) vorgesehen.

Bei der Kombination von ORC und z.B. einem Kompressor 20 kann es vorkommen, dass entweder Druckluft angefordert wird, der ORC aber keine oder nicht genügende Leistung erbringen kann, weil z.B. keine oder nicht ausreichend Wärme bereit steht. Hier kann der auf der Welle zwischen Expansionsmaschine 2 und dem Kompressor 20 angebrachter Asynchronmotor 12 den Kompressor 20 antreiben. Ebenso kann es sein, dass der Kompressor 20 keine oder nicht die gesamte Leistung des Kompressors 20 aufnehmen kann, aber Leistung aus dem ORC bereit steht. Hier kann der Ansynchronmotor 12 dann als Generator wirken und somit überschüssige Energie (wenn zulässig) in das Stromnetz einspeisen. Dies kann ohne Leistungselektronik realisiert werden.

Fig. 4 zeigt eine vierte Ausführungsform 400 des erfindungsgemäßen Systems.

Gegenüber der dritten Ausführungsform ist hier zwischen der Expansionsmaschine 2 und dem Asynchronmotor 12 eine Kupplung 13 vorgesehen. Alternativ oder zusätzlich ist eine Kupplung 14 zwischen dem Asynchronmotor 12 und dem Kompressor 20 vorgesehen.

Die Kupplungen können eingesetzt werden, damit die Expansionsmaschine 2 des ORCs vom Asynchronmotor 12 und Kompressor 20 getrennt werden kann. Dies kann sinnvoll sein, wenn keine oder nicht ausreichend Wärme für den Antrieb des ORC bereit steht. Dann könnte es der Fall sein, dass der Asynchronmotor 12 die Expansionsmaschine 2 antreibt und diese Leistung aufnimmt, was energetisch ungünstig ist. Die Kupplung 13, 14 kann schaltbar ausgeführt sein, z.B. magnetisch, oder es kann sich um eine Freilaufkupplung handeln, so dass sich die Expansionsmaschine 2 relativ zum Asynchronmotor 12 und Kompressor 20 langsamer drehen kann vor allem aber nicht mitgeschleppt, d.h. angetrieben wird. Die Kupplung 14 zwischen Asynchronmotor 12 und Kompressor 20 kann in dem Fall, dass keine Druckluft benötigt wird, die Verbindung zum dann als Generator wirkenden Asynchronmotor 12 trennen und somit die Verlustleistung die der Kompressor 20 erzeugt, reduzieren bzw. vollständig vermeiden. Diese Kupplung 14 kann ebenfalls schaltbar ausgestaltet sein, ein Freilauf kann hier nicht eingesetzt werden.

Es ist möglicherweise sicher zu stellen, dass keine elektrische Leistung dauerhaft ins Netz eingespeist wird. Eine kurzfristige Rückspeisung analog eines Aufzugs, Rolltreppe oder eines Krans könnte zulässig sein. Wenn die zulässige Zeitspanne der Rückspeisung definiert ist, und keine hydraulische, pneumatische oder sonstige Energie vom umgebenden System aufgenommen werden kann, so muss die dann überschüssige Energie reduziert werden. Folgende Möglichkeiten bestehen dafür:
- Reduktion der zugeführten Wärme, z.B. über einen Bypass des Wärmetauschers /Verdampfers 1.
- Reduktion der im ORC gewandelten Energie durch Erhöhung der Kondensationsparameter, hierdurch wird der Wirkungsgrad verschlechtert und die Leistung des ORCs reduziert, es wird durch das dann höher temperierte Kondensat auch weniger Wärme aufgenommen.
- Reduktion der im ORC gewandelten Energie durch teilweise oder vollständige Umgehung der Expansionsmaschine 2 und / oder des Verdampfers 1. Wenn der Verdampfer 1 umgangen wird, muss einer Überhitzung des Verdampfers 1 anderweitig vorgebeugt werden.
- Zuführen von zu viel erzeugter elektrischer Energie zu einem Lastwiderstand, der z.B. im Heißwasserkreis des ORCs untergebracht werden kann, oder der an Luft rückkühlen kann.

Die Vorteile der Erfindung bestehen darin, dass Druckluft und Heißwasser leicht transportierbare "Energieträger" sind. Druckluft kann im Druckluftnetz oder aber Druckluftspeichern gespeichert werden und so Unterschiede zwischen der Erzeugung und dem Verbrauch ausgleichen. Es werden Komponenten eingespart. Zum Beispiel kann der Fluidkühler beim Kompressor substituiert / verringert werden, zumindest aber reduziert sich der Eigenbedarf. Ansonsten werden Einspeiseleitung, Zähler und die Abrechnung der eingespeisten elektrischen Energie eingespart. An einigen Standorten kann es schwierig / unwirtschaftlich sein, die rückgewonnene Energie ins Netz einzuspeisen, z.B. weil die entsprechende Infrastruktur nicht vorhanden ist. Mit der Erfindung benötigt man keine potenziell aufwendige Netzeinspeisung (mit einhergehender Qualitätssicherung des eingespeisten Stroms) mehr.

Die dargestellten Ausführungsformen sind lediglich beispielhaft und der vollständige Umfang der vorliegenden Erfindung wird durch die Ansprüche definiert.

## Patentansprüche

1. System zur Energierückgewinnung innerhalb einer Anordnung von industriellen Komponenten, umfassend:
eine Wärmequelle der Anordnung;
eine thermodynamische Kreisprozessvorrichtung, insbesondere eine ORC Vorrichtung, mit einem Wärmeübertrager (1) zur Übertragung von Wärme von der Wärmequelle auf ein Arbeitsmedium der thermodynamischen Kreisprozessvorrichtung und mit einer Expansionsvorrichtung (2) zur Expansion des Arbeitsmediums und zur Erzeugung von mechanischer oder elektrischer Energie; und
wenigstens eine anzutreibende Komponente (20) der Anordnung, umfassend wenigstens eine hydraulische oder pneumatische Maschine, die mit der erzeugten Energie antreibbar ist;
**gekennzeichnet durch**
eine Elektromotor/Generator-Einheit (12), die zwischen der Expansionsvorrichtung (2) und der wenigstens einen anzutreibenden Komponente (20) vorgesehen ist;
wobei eine Ankopplung der Elektromotor/Generator-Einheit (12) an ein Stromnetz vorgesehen ist; und
wobei das System dazu ausgebildet ist, falls keine Leistung der Expansionsvorrichtung (2) als hydraulische oder pneumatische Energie von der anzutreibenden Komponente (20) aufgenommen werden kann, überschüssige Energie von der Elektromotor/Generator-Einheit (12) zeitlich begrenzt in das Stromnetz einzuspeisen, bis die Leistung der Expansionsvorrichtung (2) als hydraulische oder pneumatische Energie von der anzutreibenden Komponente (20) wieder aufgenommen werden kann.

2. System nach Anspruch 1, wobei die wenigstens eine anzutreibende Komponente eine Kompressorvorrichtung (20), insbesondere einen Druckluftkompressor, oder eine Hydraulikpumpe oder eine Wasserpumpe umfasst, die durch eine mechanische Kopplung an die Expansionsvorrichtung (2) direkt mechanisch antreibbar ist.

3. System nach Anspruch 1 oder 2, wobei eine zeitliche Begrenzung des Einspeisens von überschüssiger Energie dadurch erfolgt, dass das System dazu ausgebildet ist nach Ablauf einer zulässigen Zeitspanne Folgendes durchzuführen:
Reduktion der dem Wärmeübertrager (1) zugeführten Wärme; und/oder
Reduktion der gewandelten Energie durch Erhöhung der Kondensationstemperatur; und/oder
Reduktion der gewandelten Energie durch teilweise oder vollständige Umgehung der Expansionsvorrichtung (2) und / oder des Wärmeübertragers (1); und/oder
Zuführen von zu viel erzeugter elektrischer Energie zu einem Lastwiderstand.

4. System nach Anspruch 1, wobei zwischen der Expansionsvorrichtung (2) und der Elektromotor/Generator-Einheit (12) eine erste Kupplung (13) vorgesehen ist und/oder wobei zwischen der Elektromotor/Generator-Einheit (12) und der wenigstens einen anzutreibenden Komponente (20) eine zweite Kupplung (14) vorgesehen ist.

5. System nach einem der Ansprüche 3 bis 4, wobei weiterhin ein Energiespeicher (15) zur Aufnahme von elektrischer Energie von der Elektromotor/Generator-Einheit (12) und zur Abgabe von elektrischer Energie an die Elektromotor/Generator-Einheit (12) vorgesehen ist, oder wobei ein Lastwiderstand zur Aufnahme von elektrischer Energie von der Elektromotor/Generator-Einheit (12) vorgesehen ist.

6. System nach einem der Ansprüche 1 bis 5, wobei die thermodynamische Kreisprozessvorrichtung in Bezug auf die Strömungsrichtung des Arbeitsmediums stromaufwärts des Wärmeübertragers (1) einen weiteren Wärmeübertrager (5) umfasst, und wobei Niedertemperaturwärme oder in Kombination mit Anspruch 2, Abwärme der Kompressorvorrichtung (20) in dem weiteren Wärmeübertrager (5) zur Vorwärmung des Arbeitsmediums auf das Arbeitsmedium übertragen wird.

7. Verfahren zur Energierückgewinnung innerhalb einer Anordnung von industriellen Komponenten, umfassend die Schritte:
Übertragen von Wärme von einer Wärmequelle auf ein Arbeitsmedium einer thermodynamischen Kreisprozessvorrichtung in einem Wärmeübertrager (1);
Expandieren des Arbeitsmediums und Erzeugen von mechanischer oder elektrischer Energie mit einer Expansionsvorrichtung (2) der thermodynamischen Kreisprozessvorrichtung; und
Antreiben wenigstens einer Komponente (20) der Anordnung mit der erzeugten Energie, wobei die wenigstens eine Komponente (20) wenigstens eine hydraulische oder pneumatische Maschine umfasst;
**dadurch gekennzeichnet, dass**
eine Elektromotor/Generator-Einheit (12) zwischen der Expansionsvorrichtung (2) und der wenigstens einen Komponente (20) vorgesehen ist;
wobei das Verfahren weiterhin umfasst:
falls keine Leistung der Expansionsvorrichtung (2) als hydraulische oder pneumatische Energie von der angetriebenen Komponente (20) aufgenommen werden kann, zeitlich begrenztes Einspeisen von überschüssiger elektrischer Energie von der Elektromotor/Generator-Einheit (12) in ein Stromnetz, bis die Leistung von der Expansionsvorrichtung (2) als hydraulische oder pneumatische Energie von der angetriebenen Komponente (20) wieder aufgenommen werden kann.

8. Verfahren nach Anspruch 7, wobei eine zeitliche Begrenzung des Einspeisens von überschüssiger Energie dadurch erfolgt, dass Folgendes durchgeführt wird:
Reduktion der dem Wärmeübertrager (1) zugeführten Wärme; und/oder
Reduktion der gewandelten Energie durch Erhöhung der Kondensationstemperatur; und/oder
Reduktion der gewandelten Energie durch teilweise oder vollständige Umgehung der Expansionsvorrichtung (2) und/oder des Wärmeübertragers (1); und/oder
Zuführen von zu viel erzeugter elektrischer Energie zu einem Lastwiderstand.

9. Verfahren nach Anspruch 7 oder 8, wobei das Verfahren weiterhin umfasst:
Einspeisen von elektrischer Energie von der Elektromotor/Generator-Einheit (12) in einen systeminternen Energiespeicher (15) oder Zuführen von elektrischer Energie an einen Lastwiderstand; und/oder
Zuführen von elektrischer Energie von dem Stromnetz oder von dem systeminternen Energiespeicher (15) an die Elektromotor/Generator-Einheit (12).

10. Verfahren nach einem der Ansprüche 7 bis 9, wobei zwischen der Expansionsvorrichtung (2) und der Elektromotor/Generator-Einheit (12) eine erste Kupplung (13) vorgesehen ist und/oder wobei zwischen der Elektromotor/Generator-Einheit (12) und der wenigstens einen Komponente (20) eine zweite Kupplung (14) vorgesehen ist, wobei das Verfahren den weiteren Schritt umfasst:
Verbinden oder Trennen der Expansionsvorrichtung (2) und der Elektromotor/Generator-Einheit (12) mit der ersten Kupplung (13); und/oder
Verbinden oder Trennen der Elektromotor/Generator-Einheit (12) und der wenigstens einen Komponente (20) mit der zweiten Kupplung (14);
wobei optional die erste und/oder zweite Kupplung einen drehrichtungs- oder drehzahlabhängigen Freilauf aufweisen.

11. Verfahren nach einem der Ansprüche 7 bis 10, wobei die thermodynamische Kreisprozessvorrichtung in Bezug auf die Strömungsrichtung des Arbeitsmediums stromaufwärts des Wärmeübertragers (1) einen weiteren Wärmeübertrager (5) umfasst, und wobei das Verfahren den weiteren Schritt umfasst:
Übertragen von Abwärme der Kompressorvorrichtung (20) auf das Arbeitsmedium in dem weiteren Wärmeübertrager (5) zum Vorwärmen des Arbeitsmediums.

## Claims

1. System for energy recovery within an arrangement of industrial components comprising:
a heat source for the arrangement;
a thermodynamic circuit processing device, particularly an ORC device, having a heat exchanger (1) for transferring heat from the heat source to a working medium of the thermodynamic circuit processing device and having an expansion device (2) for expanding the working medium and for generating mechanical or electrical power; and
at least one component (20) of the arrangement to be driven, comprising at least one hydraulic or pneumatic machine which can be driven by the power generated;
**characterised by**
an electric motor/generator unit (12) provided between the expansion device (2) and the at least one component (20) to be driven;
wherein the electric motor/generator unit (12) is to be connected to a power grid; and
wherein the system is adapted, if no power of the expansion device (2) can be absorbed as hydraulic or pneumatic energy by the component (20) to be driven, to feed excess energy from the electric motor/generator unit (12) into the power grid for a limited period of time until the power of the expansion device (2) can be absorbed again as hydraulic or pneumatic energy by the component (20) to be driven.

2. System according to claim 1, wherein the at least one component to be driven comprises a compressor device (20), particularly an air compressor, or a hydraulic pump or a water pump, which can be directly mechanically driven by a mechanical coupling to the expansion device (2).

3. A system according to claim 1 or 2, wherein the feeding of excess energy for a limited period of time is accomplished by the system being adapted to perform, after an allowable period of time has elapsed, the following:
reduction of heat supplied to the heat exchanger (1); and/or
reduction of the converted energy by increasing the condensation temperature; and/or
reduction of the converted energy by partially or completely bypassing the expansion device (2) and/or the heat exchanger (1); and/or
feeding too much generated electrical energy to a load resistor.

4. System according to claim 1, wherein a first coupling (13) is provided between the expansion device (2) and the electric motor/generator unit (12) and/or wherein a second coupling (14) is provided between the electric motor/generator unit (12) and the at least one component (20) to be driven.

5. System according to one of claims 3 to 4, wherein further there is provided an energy storage (15) for receiving electrical power from the electric motor/generator unit (12) and for delivering electrical power to the electric motor/generator unit (12), or wherein there is provided a load resistor for receiving electrical power from the electric motor/generator unit (12).

6. System according to one of claims 1 to 5, wherein the thermodynamic circuit processing device comprises a further heat exchanger (5), with respect to the flow direction of the working medium upstream of the heat exchanger (1), and wherein low-temperature heat or, in combination with claim 2, waste heat from the compressor device (20) in the further heat exchanger (5) is transferred to the working medium for preheating the working medium.

7. Method of recovering energy within an arrangement of industrial components comprising the steps of:
transferring heat from a heat source to a working medium of a thermodynamic circuit processing device in a heat exchanger (1);
expanding the working medium and generating mechanical or electrical power with an expansion device (2) of the thermodynamic cycle process device; and driving at least one component (20) of the arrangement with the power generated, wherein the at least one component (20) comprises at least a hydraulic or pneumatic machine;
**characterised in that**
an electric motor/generator unit (12) is provided between the expansion device (2) and the at least one component (20);
wherein the method further comprises:
if no power of the expansion device (2) can be absorbed as hydraulic or pneumatic energy by the component (20) to be driven, feeding excess energy from the electric motor/generator unit (12) into the power grid for a limited period of time until the power of the expansion device (2) can be absorbed again as hydraulic or pneumatic energy by the component (20) to be driven.

8. Method according to claim 7, wherein the feeding of excess energy for a limited period of time is accomplished by the following:
reduction of heat supplied to the heat exchanger (1); and/or
reduction of the converted energy by increasing the condensation temperature; and/or
reduction of the converted energy by partially or completely bypassing the expansion device (2) and/or the heat exchanger (1); and/or
feeding too much generated electrical energy to a load resistor.

9. Method according to claim 7 or 8, wherein the method further comprises:
feeding electrical power from the electric motor/generator unit (12) into a system-internal energy storage (15) or feeding electrical power to a load resistor; and/or supplying electrical power from the power grid or from the system's internal energy storage (15) to the electric motor/generator unit (12).

10. Method according to one of claims 7 to 9, wherein a first coupling (13) is provided between the expansion device (2) and the electric motor/generator unit and/or wherein a second coupling (14) is provided between the electric motor/generator unit (12) and the at least one component (20), the method comprising the further step:
connecting or disconnecting the expansion device (2) and the electric motor/generator unit (12) to the first coupling (13); and/or
connecting or disconnecting the electric motor/generator unit (12) and the at least one component (20) to the second coupling (14);
wherein optionally the first and/or second coupling have a freewheel that depends on rotation direction or rotation speed.

11. Method according to one of claims 7 to 10, wherein the thermodynamic circuit processing device comprises a further heat exchanger (5) upstream of the heat exchanger (1) with respect to the flow direction of the working medium, and wherein the method comprises the further step:
transferring waste heat from the compressor device (20) to the working medium in the further heat exchanger (5) for preheating the working medium.

## Revendications

1. Système de récupération d'énergie à l'intérieur d'un agencement de composants industriels, comprenant :
une source de chaleur dudit agencement ;
un dispositif à cycle thermodynamique, en particulier un dispositif ORC, avec un échangeur de chaleur (1) permettant un transfert de chaleur de la source de chaleur vers un milieu de travail du dispositif à cycle thermodynamique et avec un dispositif d'expansion (2) permettant une détente du milieu de travail et la production d'énergie mécanique ou électrique ; et
au moins un composant à entraîner (20) appartenant à l'agencement, comprenant au moins une machine hydraulique ou pneumatique pouvant être entraînée grâce à l'énergie produite ;
**caractérisé par**
une unité électromotrice/génératrice (12) prévue entre le dispositif d'expansion (2) et le au moins un composant à entraîner (20) ;
dans lequel un couplage de l'unité électromotrice/génératrice (12) à un réseau électrique est prévu ; et
dans lequel le système est conçu pour, si aucune puissance du dispositif d'expansion (2) ne peut être absorbée sous forme d'énergie hydraulique ou pneumatique par le composant à entraîner (20), injecter de manière limitée dans le temps l'énergie excédentaire de l'unité électromotrice/génératrice (12) dans le réseau électrique jusqu'à ce que la puissance du dispositif d'expansion (2) puisse être réabsorbée sous forme d'énergie hydraulique ou pneumatique par le composant à entraîner (20).

2. Système selon la revendication 1, dans lequel le au moins un composant à entraîner comprend un dispositif formant compresseur (20), en particulier un compresseur d'air, ou une pompe hydraulique ou une pompe à eau pouvant être entraînée directement de manière mécanique grâce à un couplage mécanique au dispositif d'expansion (2).

3. Système selon la revendication 1 ou 2, dans lequel la limitation dans le temps de l'injection d'énergie excédentaire intervient du fait que le système est conçu pour, après écoulement d'une période de temps admissible, mettre en oeuvre les étapes ci-dessous consistant à :
réduire la chaleur fournie à l'échangeur de chaleur (1) ; et/ou
réduire l'énergie transformée en augmentant la température de condensation ; et/ou réduire l'énergie transformée grâce à un contournement partielle ou totale du dispositif d'expansion (2) et/ou de l'échangeur de chaleur (1) ; et/ou
fournir un excédent d'énergie électrique générée à une résistance ballast.

4. Système selon la revendication 1, dans lequel un premier couplage (13) est prévu entre le dispositif d'expansion (2) et l'unité électromotrice/génératrice (12) et/ou dans lequel un second couplage (14) est prévu entre l'unité électromotrice/génératrice (12) et le au moins un composant à entraîner (20).

5. Système selon l'une quelconque des revendications 3 à 4, dans lequel un accumulateur d'énergie (15) permettant d'absorber de l'énergie électrique de l'unité électromotrice/génératrice (12) et de fournir de l'énergie électrique à l'unité électromotrice/génératrice (12) est en outre prévu, ou dans lequel une résistance ballast permettant d'absorber de l'énergie électrique de l'unité électromotrice/génératrice (12) est prévue.

6. Système selon l'une quelconque des revendications 1 à 5, dans lequel le dispositif à cycle thermodynamique comprend un autre échangeur de chaleur (5) en amont de l'échangeur de chaleur (1) par rapport au sens d'écoulement du milieu de travail, et dans lequel de la chaleur à basse température ou, en combinaison avec la revendication 2, dans lequel la chaleur résiduelle du dispositif formant compresseur (20) est transférée au milieu de travail dans l'autre échangeur de chaleur (5) afin de préchauffer le milieu de travail.

7. Procédé de récupération d'énergie à l'intérieur d'un agencement de composants industriels, comprenant les étapes consistant à :
transférer de la chaleur d'une source de chaleur à un milieu de travail d'un dispositif de traitement à cycle thermodynamique dans un échangeur de chaleur (1) ;
détendre le milieu de travail et générer de l'énergie mécanique ou électrique à l'aide d'un dispositif d'expansion (2) du dispositif à cycle thermodynamique ; et
entraîner au moins un composant (20) de l'agencement grâce à l'énergie produite, dans lequel le au moins un composant (20) comprend au moins une machine hydraulique ou pneumatique ;
**caractérisé en ce que**
une unité électromotrice/génératrice (12) est prévue entre le dispositif d'expansion (2) et le au moins un composant (20) ;
dans lequel le procédé requiert en outre que :
si aucune puissance du dispositif d'expansion (2) ne peut être absorbée sous forme d'énergie hydraulique ou pneumatique par le composant à entraîner (20), injecter de manière limitée dans le temps de l'énergie électrique excédentaire de l'unité électromotrice/génératrice (12) dans un réseau électrique jusqu'à ce que la puissance du dispositif d'expansion (2) puisse être absorbée sous forme d'énergie hydraulique ou pneumatique par le composant à entraîner (20).

8. Procédé selon la revendication 7, dans lequel une limitation dans le temps de l'injection d'énergie excédentaire intervient du fait de la mise en oeuvre des étapes ci-dessous consistant à :
réduire la chaleur fournie à l'échangeur de chaleur (1) ; et/ou
réduire l'énergie transformée en augmentant la température de condensation ; et/ou réduire l'énergie transformée grâce à un contournement partiel ou total du dispositif d'expansion (2) et/ou de l'échangeur de chaleur (1) ; et/ou
fournir un excédent d'énergie électrique générée à une résistance ballast.

9. Procédé selon la revendication 7 ou 8, dans lequel le procédé comprend en outre les étapes consistant à :
injecter de l'énergie électrique de l'unité électromotrice/génératrice (12) dans un accumulateur d'énergie (15) interne au système ou fournir de l'énergie électrique à une résistance ballast ; et/ou
fournir de l'énergie électrique à partir du réseau électrique ou de l'accumulateur d'énergie (15) interne au système vers l'unité électromotrice/génératrice (12).

10. Procédé selon l'une quelconque des revendications 7 à 9, dans lequel un premier couplage (13) est prévu entre le dispositif d'expansion (2) et l'unité électromotrice/génératrice (12) et/ou dans lequel un second couplage (14) est prévu entre l'unité électromotrice/génératrice (12) et le au moins un composant (20), dans lequel le procédé comprend l'étape supplémentaire consistant à :
relier ou séparer le dispositif d'expansion (2) et l'unité électromotrice/génératrice (12) grâce au premier couplage (13) ; et/ou
relier ou séparer l'unité électromotrice/génératrice (12) et le au moins un composant (20) grâce au second couplage (14) ;
dans lequel le premier et/ou le second couplage présente(nt) de manière optionnelle une roue libre dépendante du sens de rotation ou de la vitesse de rotation.

11. Procédé selon l'une quelconque des revendications 7 à 10, dans lequel le dispositif à cycle thermodynamique comprend un autre échangeur de chaleur (5) en amont de l'échangeur de chaleur (1) par rapport à la direction d'écoulement du milieu de travail, et dans lequel le procédé comprend l'étape supplémentaire consistant à : transférer de la chaleur résiduelle du dispositif formant compresseur (20) au milieu de travail dans l'autre échangeur de chaleur (5) afin de préchauffer le milieu de travail.
